(19) Europäisches Patentamt
European Patent Office
Office européen des brevets

(11) **EP 3 067 784 A1**

(12) **EUROPEAN PATENT APPLICATION**

(43) Date of publication:
**14.09.2016 Bulletin 2016/37**

(21) Application number: **15305368.1**

(22) Date of filing: **11.03.2015**

(51) Int Cl.:
*G06F 3/01* (2006.01)    *H04M 1/725* (2006.01)
*H04W 52/02* (2009.01)    *G06F 1/16* (2006.01)
*G06Q 20/32* (2012.01)    *G06F 3/0346* (2013.01)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(71) Applicant: **GEMALTO SA**
**92190 Meudon (FR)**

(72) Inventors:
• **Do Thuong, Tuan**
**92190 Meudon (FR)**
• **Callon de Monet de Lamarck, Charlotte**
**92190 Meudon (FR)**

(74) Representative: **Delaval, Guillaume Laurent et al**
**Gemalto SA**
**Intellectual Property Department**
**6, rue de la Verrerie**
**92197 Meudon Cedex (FR)**

(54) **A PREHENSILE NEAR FIELD COMMUNICATIONS SYSTEM CONTROLLABLE BY A SHAKING GESTURE**

(57) The invention relates to a prehensile telecommunication system comprising a motion sensor (106) adapted to provide measurement data representative of the motion of the telecommunication system and a near field communications module (100) with a contactless antenna (101), further comprising a processing unit configured to detect shake gestures, the contactless antenna (101) being activated when a movement corresponding to a first predefined shake gesture is detected and deactivated when a movement corresponding to a second predefined shake gesture is detected.

Fig. 1

**Description**

TECHNICAL FIELD

The present invention relates to a prehensile telecommunication system controllable by a shaking gesture. The invention is applicable in particular, but not exclusively, to near field communications systems.

BACKGROUND OF THE INVENTION

Mobile devices such as smartphones can be adapted to support payment services. Near field communications (NFC) enables mobile devices cooperating with reader modules to carry out financial transactions. More precisely, the user will bring its mobile device into close proximity with a reader module, typically at a distance less or equal to ten centimetres. Near field communications can also be used for other kind or services such as for public transportation. In this description, the expression "Near Field Communication" also designated by the acronym NFC should be understood as short range communications and should not be interpreted as restricted to a standard in particular.

In order to support NFC, the mobile device generally comprises an NFC sub-system with a microcontroller and a contactless antenna. A secure element can also be used to secure the data exchange with the reader modules. Alternatively, the microcontroller, the contactless antenna and the secure element can be embedded into a device distinct from the mobile device, for example a MicroSD card. Once inserted into a mobile device, said distinct device allows carrying out NFC transactions.

Depending of the configuration of the NFC sub-system, the contactless antenna can be always activated or it can be switched between an active state and an inactive state.

If the contactless antenna is always activated, this is very convenient for the user as he just has to hold its mobile device in front of the contactless reader for completing the transaction. The drawback is that the NFC sub-system and the activated contactless antenna are always ready to perform a transaction, even when not required by the user. This situation can create a data breach. A data breach can be defined as a security incident in which sensitive, protected or confidential data is copied, transmitted, viewed, stolen or used by an individual unauthorized to do so.

Additionally, having a contactless antenna always activated even when unused involves a significant energy consumption which is detrimental.

In some other existing solutions, a mechanism is implemented in the mobile device and/or in a device cooperating with the mobile device to activate or deactivate the contactless antenna, that is to say to switch it on or off. For that purpose, an application can be executed by the mobile device allowing the user to activate or deactivate the contactless antenna through an adapted user interface. In case of an Android (trademark) mobile device, the application can be downloaded on an online store, for example Google play (trademark). This mechanism allows a safer use of the NFC functionalities for mobile transactions. However, as it is not user friendly, the process of deactivating the contactless antenna can be neglected or forgotten by the user leading to a data breach and higher power consumption.

SUMMARY OF THE INVENTION

The invention relates to a prehensile telecommunication system comprising a motion sensor adapted to provide measurement data representative of the motion of the telecommunication system and a near field communications module with a contactless antenna. It is further comprising a processing unit configured to detect shake gestures, the contactless antenna being activated when a movement corresponding to a first predefined shake gesture is detected and deactivated when a movement corresponding to a second predefined shake gesture is detected.

The motion sensor is for example an accelerometer or a gyroscope.

According to one embodiment of the invention, the prehensile telecommunication system comprises a module producing an haptic feedback each time a first or second shake gesture is detected. The module producing an haptic feedback can be a vibration motor.

As an example, the processing unit is a secure element.

The processing unit can be a microcontroller or a microprocessor.

In one embodiment, the system is a Smartphone embedding the motion sensor and the near field communication module.

Alternatively, the prehensile telecommunication system can be composed of a Smartphone embedding the motion sensor and of a removable card embedding the near field communications module, said removable card being configured to be inserted in said Smartphone, the Smartphone being configured to transfer measurement data representative of the movements of the system as measured by the motion sensor to the near field communication module.

The card is for example of MicroSD type.

In one embodiment, once the contactless antenna is activated, it is then deactivated after a predetermined amount of time if a shake gesture of the second time is not detected by the processing unit.

The invention also relates to a card configured to be inserted and connected through an electrical interface to a Smartphone comprising a motion sensor, said card comprising a near field communications module with a contactless antenna, the card being further configured to receive through the electrical interface data representative of the motion detected by the motion sensor, to detect the occurrence of a first shake gesture and a second shake gesture, the contactless antenna being activated upon detection of the first shake gesture and deactivated upon detection of the second shake gesture.

The invention also relates to a method to change the state of a contactless antenna of a prehensile telecommunication system comprising a motion sensor and a near field communications module with a contactless antenna, the state of the contactless antenna being either activated or deactivated. The method comprises the steps of:

- providing by the motion sensor measurement data representative of the motion of the telecommunication system;
- detecting from said measurement data if the movement of the system corresponds to a shake gesture;
- if a shake gesture is detected, changing the state of the contactless antenna.

## BRIEF DESCRIPTION OF THE DRAWINGS

Additional features and advantages of the invention will be more clearly understandable after reading a detailed description of one preferred embodiment of the invention, given as an indicative and non-limitative example, in conjunction with the following drawings:

- figure 1 is an example of prehensile telecommunication system according to the invention;
- figures 2A-2D schematically illustrate data that can be provided by a motion sensor as a consequence of a shake gesture applied to a mobile device
- figure 3 illustrates a method to change the state of a contactless antenna of a prehensile telecommunication system upon detection of a shake gesture;
- figure 4 is an illustration of a shake gesture.

## DETAILED DESCRIPTION

Herein under is considered a case in which the invention method for entering data is implemented by a mobile telephone, as a mobile device, in cooperation with microSD card, a smart card or a secure element.

However, it is only for exemplifying purposes and is not considered to reduce the scope of the present invention.

In the following description, numerous specific details are set forth. However, it is understood that embodiments may be practiced without these specific details. In other instances, well known circuits, structures and techniques have not been show in detail in order not to obscure the understanding of the description.

In this description, the example of financial transactions is taken as the main example. However, the skilled person will appreciate that the invention is applicable to any prehensile telecommunication system supporting near field communications.

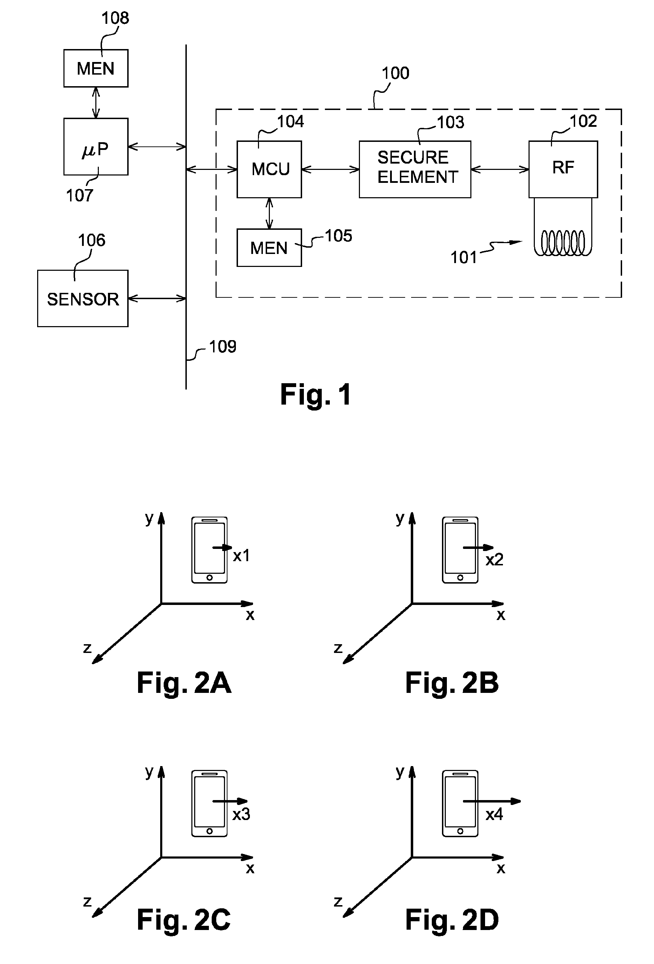

Figure 1 is an example of prehensile telecommunication system according to the invention.

The system comprises a contactless subsystem 100, a motion sensor 106, a microprocessor 107 and a memory 108 associated to the microprocessor.

In this embodiment, the contactless subsystem 100 allows carrying out mobile payment using near field communications (NFC). For that purpose, the subsystem 100 comprises a contactless antenna 101 connected to an analog front-end. The analog front-end is also connected to a secure element 103.

Secure elements are small devices comprising a memory, a microprocessor and an operating system for computing treatments. Such secure elements may comprise a plurality of memories of different types. They are called "secure" because they are able to control the access to the data they contain and to authorize or not the use of data by other machines. The secure elements may also provide computation services based on cryptographic components. In general, secure elements have limited computing resources and are intended to be connected to a host machine. Secure elements may be removable or fixed to a host device. Smart cards are portable secure elements.

The secure elements may embed an object-oriented virtual machine in order to be able to run applications written in an object-oriented language. Usually, these object-oriented applications manage applicative data which are stored into the secure element. For instance, many smart cards comprise a virtual machine and applets compliant with Javacard (R) specifications.

In the example of subsystem 100, the secure element is controlled by a microcontroller 104 which is itself connected to a non volatile memory 105 comprising executable code and data.

The subsystem 100 is connected to a motion sensor 106 and a micro processor 107 via a communication bus 109. The microprocessor 107 is connected to a memory 108 comprising executable code and data.

The proposed system is prehensile, that is to say adapted for grasping. As an example, the proposed system is a mobile device such as a smartphone. In another embodiment, the prehensile system is composed of a mobile device and of a removable device implementing the subsystem 100. For example, the removable device is a MicroSD card.

The principle of the proposed mechanism is to activate or to deactivate the contactless antenna upon detection of one or several shake gesture.

A shake gesture applied by the user sets in motion the mobile device. The motion is then analysed and it is then decided if it corresponds to a shake gesture. Based on the result of this analysis, the contactless antenna can be either activated or deactivated.

In one embodiment, a first shake gesture can be used for activating the contactless antenna and a second shake gesture different from the first one can be used for deactivating it. For example, the first shake gesture is a gesture which is applied by the user to the telecommunication system with higher amplitude than required for the second shake gesture.

A shake gesture can be considered as a rapid movement of the prehensile telecommunication system in one direction. Alternatively, a shake gesture can be defined as a rapid movement of the prehensile telecommunication system in one direction followed by another one in another direction, for example the opposite direction.

According to one embodiment of the invention, the first and second shake gestures can be identical or similar meaning that the detection process for these two gestures will provide the same result. In that case, the user has just to repeat the same identical or similar shake gesture to activate and deactivate successively the contactless antenna. For example, at the time of paying a bill in a restaurant, the user will shake his mobile device a first time, bring it into close proximity with a reader module to perform the transaction and finally shake it one more time using the same gesture in order to deactivate the contactless antenna. Advantageously, the contactless antenna is activated during a short time window during which the user wants to use the contactless payment service. Outside of this time window, there is no possibility to capture a signal emitted by the contactless antenna, to set up an unwanted transaction, nor to gather user information through the near field contact subsystem. As an example, this time window can be implemented using an internal software timer.

The motion sensor 106 is adapted to provide measurement data which can be processed for example by the microcontroller 104 in order to detect shake gestures and to trigger accordingly the activation or the deactivation of the contactless antenna. Alternatively, the processing of measurement data provided by the motion sensor 106 can be implemented by the microprocessor 107 or by the secure element 103.

Advantageously, implementing the shake gesture detection in a secure element 103 will improve the security of the system as it makes difficult to fraudulently activate or deactivate the contactless antenna.

In one embodiment of the invention, the prehensile telecommunication system comprises a module to implement a haptic feedback each time a first or second shake gesture is detected. This allows the user to be sure that its instructions have been correctly taken into account. The haptic feedback can be implemented using a vibration motor embedded into the prehensile telecommunication system. As an example, a first vibrating sequence will indicate that the contactless antenna has been activated and second vibration sequence will indicate that the contactless antenna has been deactivated.

**Figures 2A-2D** schematically illustrate data that can be provided by a motion sensor as a consequence of a shake gesture applied to a mobile device.

In a preferred embodiment, the motion sensor 106 is an accelerometer and provides periodically an acceleration value for each coordinate x, y, z of a three-dimensional space.

A simple example of algorithm that can be used to detect a shake gesture is provided hereafter.

The measurements are provided by the sensor at a sensor delivery rate. For example, one measurement per axis is provided at a sensor delivery rate of twenty milliseconds (ms).

Therefore, for the i-th measurement delivery period, three measurement values $x\_i$, $y\_i$ and $z\_i$ are provided.

$x\_i$ value corresponds to the acceleration force along the x axis, including gravity and expressed in $m/s^2$.

$y\_i$ value corresponds to the acceleration force along the y axis, including gravity and expressed in $m/s^2$.

$z\_i$ value corresponds to the acceleration force along the z axis, including gravity and expressed in $m/s^2$.

The algorithm can use two thresholds, a movement threshold mvtThreshold and a time threshold timeThreshold. As an example, these two threshold can be chosen as mvtThreshold = 15 $m/s^2$ and timeThreshold = 200 ms.

Then, the algorithm calculates a state for each measurement delivery period. Figures 2A-2D illustrate four measurements values $x\_1$, $x\_2$, $x\_3$, $x\_4$ provided for four successive measurement periods during a shake gesture applied along the x axis.

For each period, a state value is calculated using the following formula:

$$\text{State } (x\_n, y\_n, z\_n) = abs(x\_n - last\_x + y\_n - last\_y + x\_z - last\_z)$$

wherein:

x_n is the measured acceleration force along the x axis for the n-th measurement period;

y_n is the measured acceleration force along the y axis for the n-th measurement period;

z_n is the measured acceleration force along the z axis for the n-th measurement period;

abs() is a function calculating the absolute value of its arguments;

last_x is the measured acceleration force along the x axis of the (n-1)th measurement period;

last_y is the measured acceleration force along the y axis of the (n-1)th measurement period;

last_z is the measured acceleration force along the z axis of the (n-1)th measurement period.

Taking the example of figures 2A-2D, the four state values are calculated as follow:

$$\text{State } (x\_1, y\_1, z\_1) = abs(x\_1 - last\_x + y\_1 - last\_y + z\_1 - last\_z)$$

In this example, it is considered that last_x, last_y and last_z are initially equal to zero.
For the other three time periods, one have:

State (x_2, y_2, z_2) = abs(x_2 - last_x +y_2 - last_y + z_2 - last_z) with last_x = x_1, last_y = y_1 and last_z = z_1;

State (x_3, y_3, z_3) = abs(x_3 - last_x +y_3 - last_y + z_3 - last_z) with last_x = x_2, last_y = y_2 and last_z = z_2;

State (x_4, y_4, z_4) = abs(x_4 - last_x +y_4 - last_y + z_4 - last_z) with last_x = x_3, last_y = y_3 and last_z = z_3.

For each measurement period, the state value is compared to the threshold mvtThreshold and the difference between two successive measurements is compared to timeThreshold.
For example, State (x_1, y_1, z_1) and State (x_2, y_2, z_2) are below mvtThreshold, which means that no shake gesture is detected. State (x_3, y_3, z_3) may be greater than mvtThreshold, but if the time difference between the initial measurement and the third measurement acquisition is lower than timeThreshold, the movement is considered as too fast and it is therefore no detected as a shake gesture.
Finally, the third value State (x_3, y_3, z_3) fulfils the two threshold criteria and the movement is detected as a shake gesture.
This algorithm is very simple and the skilled person will understand that alternatives and refinements could be taken into account to improve the detection of shake gestures. For example,

- gravity can be taken into account;

- a high-pass filter can be used for noise or gravity;

- the number of shakes can be counted.

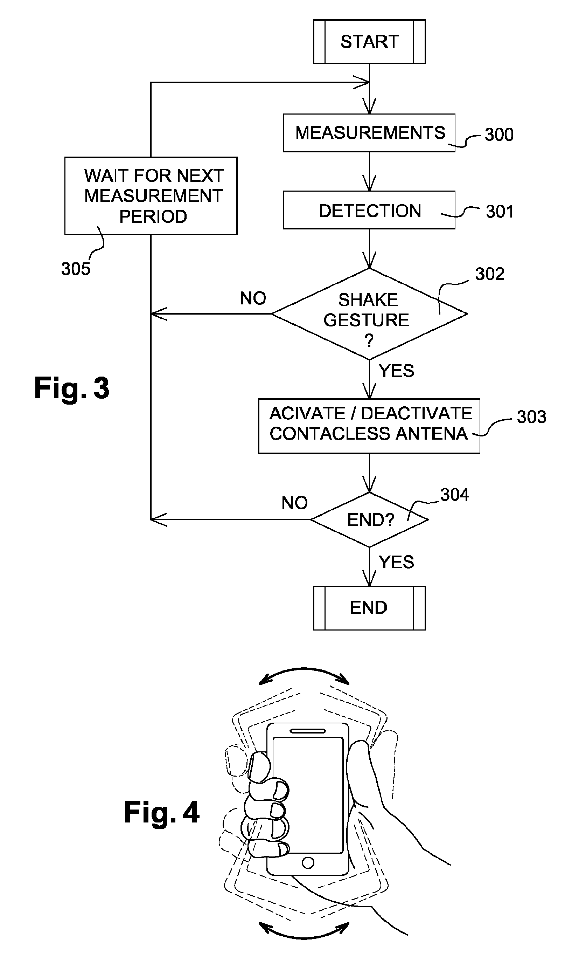

Figure 3 illustrates a method to change the state of a contactless antenna of a prehensile telecommunication system upon detection of a shake gesture.
The prehensile telecommunication system comprises a motion sensor adapted to detect the movements of the telecommunication system and a near field communications module with a contactless antenna.
In this example, the antenna can be either in an activated state or in a deactivated state. In activated state, the contactless antenna is able to receive and transmit signals whereas in deactivated state the antenna can neither transmit nor receive signals. The contactless antenna can be switched on to be activated and switched off to be deactivated.

In a first step 300 the motion sensor provides measurement data representative of the motion of the telecommunication system.

Then, a step 301 aims at detecting from said measurement data if the movement of the system corresponds to a shake gesture. This detection step is mandatory as the contactless activation state must change only if a movement corresponding to a shake gesture is applied by the user holding the phone.

If 302 a shake gesture is detected, a step is applied to change the state of the contactless antenna. Said differently, it the contactless antenna is in active state, it goes into inactive state and it the contactless antenna is in inactive state, it goes into active state.

**Claims**

1. A prehensile telecommunication system comprising a motion sensor (106) adapted to provide measurement data representative of the motion of the telecommunication system and a near field communications module (100) with a contactless antenna (101), further comprising a processing unit configured to detect shake gestures, the contactless antenna (101) being activated when a movement corresponding to a first predefined shake gesture is detected and deactivated when a movement corresponding to a second predefined shake gesture is detected.

2. A prehensile telecommunication system according to claim 1, wherein the motion sensor (106) is an accelerometer.

3. A prehensile telecommunication system according to claim 1 wherein the motion sensor (106) is a gyroscope.

4. A prehensile telecommunication system according to any of the preceding claims comprising a module producing an haptic feedback each time a first or second shake gesture is detected.

5. A prehensile telecommunication system according to claim 4, wherein the module producing an haptic feedback is a vibration motor.

6. A prehensile communication system according to any of the preceding claims, wherein the processing unit is a secure element (103).

7. A prehensile telecommunication system according to any of claims 1 to 5, wherein the processing unit is a microcontroller (104) or a microprocessor (107).

8. A prehensile telecommunication system according to any of the preceding claims, said system being a Smartphone embedding the motion sensor (106) and the near field communication module (100).

9. A prehensile telecommunication system according to any of claims 1 to 7 composed of a Smartphone embedding the motion sensor (106) and of a removable card embedding the near field communications module (100), said removable card being configured to be inserted in said Smartphone, the Smartphone being configured to transfer measurement data representative of the movements of the system as measured by the motion sensor (106) to the near field communication module (100).

10. A prehensile telecommunication system according to claim 9, wherein the card is of MicroSD type.

11. A prehensile telecommunication system, wherein once the contactless antenna (101) is activated, it is then deactivated after a predetermined amount of time if a shake gesture of the second time is not detected by the processing unit.

12. A card configured to be inserted and connected through an electrical interface to a Smartphone comprising a motion sensor (106), said card comprising a near field communications module (100) with a contactless antenna (101), the card being further configured to receive through the electrical interface data representative of the motion detected by the motion sensor (106), to detect the occurrence of a first shake gesture and a second shake gesture, the contactless antenna being activated upon detection of the first shake gesture and deactivated upon detection of the second shake gesture.

13. A method to change the state of a contactless antenna (101) of a prehensile telecommunication system comprising a motion sensor (106) and a near field communications module (100) with a contactless antenna (101), the state of the contactless antenna being either activated or deactivated, the method comprising the steps of:

- providing (300) by the motion sensor measurement data representative of the motion of the telecommunication system;
- detecting (301) from said measurement data if the movement of the system corresponds to a shake gesture;
- if (302) a shake gesture is detected, changing (303) the state of the contactless antenna.

Fig. 1

Fig. 2A

Fig. 2B

Fig. 2C

Fig. 2D

Fig. 3

Fig. 4

Europäisches
Patentamt

European
Patent Office

Office européen
des brevets

# EUROPEAN SEARCH REPORT

Application Number

EP 15 30 5368

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br><br>A | GB 2 515 550 A (MASTERCARD INTERNATIONAL INC [US]) 31 December 2014 (2014-12-31)<br>* page 3, line 9 - page 4, line 3 *<br>* page 11, line 10 - page 12, line 2; figures 1-3 *<br>* page 13, line 1 - page 15, line 2; figure 2 *<br>* page 16, line 4 - line 12 *<br>* page 19, line 28 - page 20, line 5 * | 1-11,13<br><br>12 | INV.<br>G06F3/01<br>H04M1/725<br>H04W52/02<br>G06F1/16<br>G06Q20/32<br>G06F3/0346 |
| X<br><br>A | WO 2014/132212 A1 (LOGOMOTION SRO [SK]) 4 September 2014 (2014-09-04)<br>* abstract *<br>* page 3, line 4 - line 13 *<br>* page 5, line 9 - line 16 *<br>* page 6, line 12 - page 7, line 9; figures 1,2,6 * | 12<br><br>1-11,13 | |
| A | US 2013/033418 A1 (BEVILACQUA MATHEW WILLIAM [US] ET AL) 7 February 2013 (2013-02-07)<br>* paragraphs [0022], [0025]; figure 1 *<br>* paragraphs [0029] - [0031], [0035]; figure 2 * | 3 | TECHNICAL FIELDS SEARCHED (IPC)<br><br>G06F<br>H04M<br>H04W<br>G06Q |
| A | US 2009/270045 A1 (FLAHERTY NATASHA MARGARET MINENKO [US]) 29 October 2009 (2009-10-29)<br>* paragraphs [0002], [0015], [0016] *<br>* paragraphs [0031], [0032]; figures 1,2 * | 4,5 | |
| A | EP 2 485 542 A2 (SONY CORP [JP]) 8 August 2012 (2012-08-08)<br>* abstract *<br>* paragraphs [0005] - [0007], [0009], [0011]; figure 1 *<br>* paragraph [0014] - paragraph [0017]; figures 2A,2B * | 1-13 | |

The present search report has been drawn up for all claims

| Place of search | Date of completion of the search | Examiner |
|---|---|---|
| The Hague | 17 August 2015 | Pascual Vallés, E |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 15 30 5368

This annex lists the patent family members relating to the patent documents cited in the above-mentioned European search report.
The members are as contained in the European Patent Office EDP file on
The European Patent Office is in no way liable for these particulars which are merely given for the purpose of information.

17-08-2015

| Patent document cited in search report | | Publication date | Patent family member(s) | | Publication date |
|---|---|---|---|---|---|
| GB 2515550 | A | 31-12-2014 | GB 2515550 A | | 31-12-2014 |
| | | | US 2015006378 A1 | | 01-01-2015 |
| WO 2014132212 | A1 | 04-09-2014 | NONE | | |
| US 2013033418 | A1 | 07-02-2013 | CN 103858072 A | | 11-06-2014 |
| | | | EP 2740014 A2 | | 11-06-2014 |
| | | | JP 2014527666 A | | 16-10-2014 |
| | | | KR 20140054187 A | | 08-05-2014 |
| | | | US 2013033418 A1 | | 07-02-2013 |
| | | | US 2014337732 A1 | | 13-11-2014 |
| | | | WO 2013022712 A2 | | 14-02-2013 |
| US 2009270045 | A1 | 29-10-2009 | EP 2294538 A1 | | 16-03-2011 |
| | | | JP 2011525267 A | | 15-09-2011 |
| | | | KR 20110008223 A | | 26-01-2011 |
| | | | US 2009270045 A1 | | 29-10-2009 |
| | | | WO 2009134545 A1 | | 05-11-2009 |
| EP 2485542 | A2 | 08-08-2012 | EP 2485542 A2 | | 08-08-2012 |
| | | | JP 2012165379 A | | 30-08-2012 |
| | | | US 2012202423 A1 | | 09-08-2012 |
| | | | US 2015215003 A1 | | 30-07-2015 |

EPO FORM P0459

For more details about this annex : see Official Journal of the European Patent Office, No. 12/82